# EUROPÄISCHE PATENTSCHRIFT

(11) **EP 4 390 186 B1**
(45) Veröffentlichungstag und Bekanntmachung des Hinweises auf die Patenterteilung: **25.03.2026**
(21) Anmeldenummer: 23216747.8
(22) Anmeldetag: 14.12.2023
(51) Int. Cl.: F16J 15/00, F16J 15/322, F16J 15/324, F16C 33/78, F03B 11/00

(54) **DICHTUNGSSYSTEM FÜR UNTERWASSERTURBINE**
SUBSEA TURBINE SEALING SYSTEM
SYSTÈME D'ÉTANCHÉITÉ POUR TURBINE SOUS-MARINE

(30) Priorität: 20.12.2022 DE 102022214031
(43) Veröffentlichungstag der Anmeldung: 26.06.2024
(73) Patentinhaber: Aktiebolaget SKF, 415 50 Göteborg (SE)
(72) Erfinder: Hofmann, Matthias, 97422 Schweinfurt (DE); Baumann, Michael, 97503 Gädheim (DE); Memmel, Marcel, 97714 Ebenhausen (DE)
(74) Vertreter: Kuhstrebe, Jochen

(56) Entgegenhaltungen:
- EP-A1- 1 223 359
- EP-A1- 3 591 245
- DE-A1- 102011 016 185
- DE-A1- 102013 008 967
- DE-A1- 3 718 411

## Beschreibung

Vorliegende Erfindung betrifft ein Dichtungssystem zum Abdichten einer Welle einer Unterwasserturbine gemäß dem Oberbegriff von Patentanspruch 1.

Unterwasserturbinen, insbesondere in Meeresanwendungen, wie beispielsweise in Gezeitenenergieanlagen, werden üblicherweise gegenüber dem umgebenden Wasser, insbesondere Seewasser mit Hilfe von Dichtungssystemen abgedichtet. Dabei müssen insbesondere die Lageranordnungen, die die einzelnen Teile der Unterwasserturbine beweglich miteinander verbinden, zuverlässig gegen einen Eintritt von Wasser abgedichtet sein. Gleichzeitig müssen Dichtungen verhindern, dass äußere Elemente, wie beispielsweise Staub, Abrieb, Partikel, Wasser und Meeresspezies, wie z. B. Plankton und Algen, in die Lageranordnungen eindringen und seine Komponenten beschädigen. Partikel können auch in die Dichtungen selbst eindringen und dann die Dichtungslebensdauer reduzieren.

Üblicherweise sind mehrere benachbarte Dichtungen vorgesehen, um eine redundantes Dichtungssystem zu schaffen, wobei die Lippen der benachbarten Dichtungen auch in unterschiedlichen Richtungen orientiert sein können. Bekannte Dichtungssysteme sind in der DE 102013 008 967 A1, DE 37 18411 A1, EP 3 591 245 A1 und DE 10 2011 016 185 A1 offenbart.

Allerdings üben die im Wasser vorherrschenden Drücke hohe Kräfte auf Dichtungen und mit diesen in Anlage stehende Gleitflächen aus, wodurch gegenseitiger Verschleiß an diesen Komponenten innerhalb kurzer Zeit auftreten, und so eine dichtende Wirkung beeinträchtigt werden kann. Dabei kann ein Austausch aufwändig oder kostenintensiv sein, und unter Umständen nicht jederzeit durchgeführt werden.

Insbesondere können die Dichtungen unter Umständen nicht unter Wasser ausgetauscht werden kann. Somit können solche Wartungsvorgänge teuer sein und erfordern, dass die Unterwasserturbine häufig und während einer langen Zeit stillgelegt wird.

Es ist deshalb Aufgabe vorliegender Erfindung, ein Dichtungssystem für eine Unterwasserturbine bereitzustellen, bei dem der Verschleiß der Dichtungen verringert ist und ein Wartungsvorgang vereinfacht ist.

Diese Aufgabe wird durch ein Dichtungssystem gemäß Patentanspruch 1 gelöst.

Im Folgenden wird ein Dichtungssystem für eine Unterwasseranwendung, insbesondere eine Meeresanwendung vorgeschlagen. Dabei ist das Dichtungssystem insbesondere zum Abdichten einer rotierbaren Komponente, wie beispielsweise einer Welle, einer Unterwasserturbine, insbesondere einer Unterwasserturbine einer Gezeitenanlage ausgelegt, wobei das Dichtungssystem mehrere ringförmige Dichtungsträger aufweist, die aneinander angrenzend angeordnet sind. Dabei trägt jeder Dichtungsträger zumindest ein Dichtelement mit einem ringförmigen Dichtungskörper und mindestens einer sich von dem Dichtungskörper erstreckenden Dichtlippe, wobei der Dichtungskörper an dem Dichtungsträger befestigt ist und die Dichtlippe sich in Richtung der abzudichtenden Welle erstreckt. Das Dichtelement selbst ist vorzugsweise eine Seewasserdichtung, also ein Dichtelement das dazu geeignet ist, gegen Seewasser abzudichten. Weiterhin weist die Dichtlippe eine Lauffläche auf, mit der die Dichtlippe an einer direkt oder indirekt an der rotierbaren Komponente ausgebildeten Gegenlauffläche anläuft. Dabei kann die Gegenlauffläche direkt von der rotierbaren Komponente selbst, also beispielsweise der Welle, oder indirekt von einem drehfest an der rotierbaren Komponente befestigten Anlaufelement, wie beispielsweise einer Anlaufhülse, gebildet sein.

Um den Verschleiß des Dichtungssystems und auch den Verschleiß an der Gegenlauffläche zu minimieren, ist zwischen Dichtungsträger und rotierbarer Komponente ein Freiraum vorgesehen ist, der eine Kammer bildet, in der ein Schmiermittel aufgenommen ist. Dazu kann der Dichtungsträger beispielsweise eine in Richtung Welle offene Aussparung aufweisen, die die Kammer bildet. Das in der Kammer aufgenommene Schmiermittel sorgt dabei dafür, dass die Reibung zwischen Dichtlippe und Gegenlauffläche verringert wird, was wiederum den Verschleiß vermindert. Darüber hinaus dient das Schmiermittel als Korrosionsschutz der innenliegenden Dichtungsträgerringe. Das Schmiermittel ist bevorzugt ein Schmierfett. Gemäß einem weiteren bevorzugten Ausführungsbeispiel ist weiterhin zumindest die Dichtlippe, vorzugsweise das gesamte Dichtelement aus einem Material gefertigt, das reibungsreduzierte Eigenschaften hat. Insbesondere kann die Dichtlippe aus einem Material gefertigt sein, in das ein Festschmiermittel eingebettet ist oder das ein Festschmiermittel ausbildet. Ebenfalls ist möglich, dass an der Dichtlippe, insbesondere an der Laufläche ein reibungsreduzierendes Material aufgebracht ist, beispielsweise mittels einer entsprechenden Beschichtung. Dadurch kann ein reibungsreduziertes Dichtungssystem bereitgestellt werden, das auch ohne das Vorhandensein von Schmiermittel, beispielsweise nachdem das Schmiermittel aufgebraucht oder gealtert ist, eine reibungsreduzierte Abdichtung bereitstellt.

Um zudem die Wartung zu vereinfachen, weist das Dichtungssystem weiterhin einen als Befestigungs-Dichtungsträger ausgebildeten Dichtungsträger auf, wobei der Befestigungs-Dichtungsträger dazu ausgelegt ist, an einer stationärer Komponente der Gezeitenanlage, insbesondere an einem Lagerring einer die abzudichtenden Welle lagernden Lagereinheit oder einem die Lagereinheit aufnehmenden Gehäuse befestigt zu werden. Weiterhin weist der Befestigungs-Dichtungsträger an einer der stationären Komponente zugewandten Stirnseite weiterhin mindestens eine ringförmige Nut auf, die dazu ausgelegt ist, eine statische Dichtung, insbesondere eine O-Ring Dichtung, aufzunehmen. Zudem ist in dem Befestigungs-Dichtungsträger eine Bohrung vorgesehen, die einen ersten sich radial erstreckenden Bohrungsteil und einen zweiten sich axial erstreckenden Bohrungsteil aufweist, wobei sich der sich axial erstreckende Bohrungsteil von dem ersten Bohrungsteil bis zu der der stationären Komponente zugewandten Stirnseite erstreckt, so dass der zweite Bohrungsteil radial innerhalb der ringförmigen Nut in die Stirnseite mündet.

Alternativ oder zusätzlich weist das Dichtungssystem eine Anlaufhülse auf, die eine Gegenlauffläche für die mehreren Dichtlippen bildet, wobei die Anlaufhülse an ihrer inneren Mantelfläche mindestens eine ring-förmige Nut aufweist, die dazu ausgelegt ist, eine statische Dichtung, insbesondere eine O-Ring Dichtung, aufzunehmen. Weiterhin ist in der Anlaufhülse eine Bohrung vorgesehen, die einen ersten sich axial erstreckenden Bohrungsteil und einen zweiten sich radial erstreckenden Bohrungsteil aufweist, wobei der sich radial erstreckende Bohrungsteil von dem ersten Bohrungsteil bis zu der der inneren Mantelfläche erstreckt, so dass der zweite Bohrungsteil in axialer Dichtungsrichtung hinter der ringförmigen Nut in die innere Mantelfläche mündet.

Diese Bohrungen in dem Befestigungs-Dichtungsträger bzw. in der Anlaufhülse können unter anderem dazu verwendet werden, die statische Dichtungen (O-Ringe) auf ihre Abdichtfähigkeit zu untersuchen. Dafür kann in die jeweilige Bohrung ein Testfluid eingebracht werden, das beispielsweise mit einem vorbestimmten Druck beaufschlagt wird, bis zu dem die statische Dichtung mindestens abdichten soll.

Zudem kann in die Bohrung, die in der Anlaufhülse ausgebildet ist, für die axiale Verschiebbarkeit der Anlaufhülse ein Schmiermittel, insbesondere ein Öl eingebracht werden, das sich an der Kontaktfläche zwischen Anlaufhülse und rotierbarer Komponente anlagert und die axiale Verschiebbarkeit der Anlaufhülse erleichtert.

In einem weiteren bevorzugten Ausführungsbeispiel ist an dem Dichtungsträger eine in Richtung der rotierbaren Komponente offene Aussparung ausgebildet ist, die die Kammer bildet, wobei die die Kammer bildende Aussparung derart dimensioniert und angeordnet, dass zwischen einer der Lauffläche abgewandten Seite der Dichtlippe und dem Dichtungsträger ein Freiraum verbleibt, der die mit Schmiermittel beaufschlagbare Kammer ausbildet. Dabei ist insbesondere bevorzugt, dass die Aussparung als Dichtlippenaufnahmeaussparung ausgebildet ist, die eine Dichtlippe umgibt und aufnimmt, wobei der Freiraum zwischen Dichtlippe und Aussparung, die Kammer bildet. Diese Ausgestaltung ermöglicht, dass das Schmiermittel die Dichtwirkung der Dichtlippe verstärkt, da es den Anpressdruck der Dichtlippe auf der Gegenlauffläche erhöht. Gleichermaßen sorgt diese Ausgestaltung dafür, dass bei der ersten gegen Wasser abdichtenden Dichtlippe, der Wasserdruck durch den Schmiermitteldruck ausgeglichen wird, was wiederum für eine Verringerung des Verschleißes sorgt.

Um auch bei dieser Ausgestaltung einen Verschleiß weiter zu verringern, kann zudem vorgesehen sein, dass auch auf der gleichen Seite der Lauffläche der Dichtlippe Schmiermittel vorgesehen ist, so dass die Dichtlippe bezüglich des Schmiermittels nicht zusätzlich mit Druck beaufschlagt ist. In diesem bevorzugten Ausführungsbeispiel sorgt das eingebrachte Schmiermittel als zusätzliche Barriere gegen das Eindringen von Seewasser, da das Wasser zusätzlich das Schmiermittel verdrängen muss, um in und durch das Dichtungssystem einzudringen.

Gemäß einem weiteren bevorzugten Ausführungsbeispiel weist der Dichtungsträger mindestens eine, vorzugsweise radiale, Durchgangsbohrung auf, die fluidisch mit der Kammer verbunden ist. Durch diese Durchgangsbohrung kann Schmiermittel in die Kammer eingebracht werden. Zudem kann die Bohrung dazu verwendet werden, eingedrungenes Wasser aus dem Dichtungssystem zu entfernen. Weiterhin kann die Bohrung dazu verwendet werden, nach einem Einbau des Dichtungssystems in die Unterwasserturbine, die Abdichtfähigkeit der Dichtlippe zu testen. Dazu kann beispielsweise an der Durchgangsbohrung ein Vakuum angelegt werden, oder ein Testfluid eingebracht werden, um beispielsweise mit Unterdruck bzw. Überdruck auf Dichtheit zu testen.

Ebenfalls ist vorteilhaft, wenn in der Durchgangsbohrung oder in der Kammer ein Sensor angeordnet ist, der einen Eintritt von Wasser in die Kammer oder in die Bohrung detektiert und vorzugsweise an ein Überwachungssystem übermitteln kann.

Weiterhin ist bevorzugt, wenn der Dichtungsträger zwei radiale Durchgangsbohrungen aufweist, die fluidisch mit der Kammer verbunden sind, wobei die zwei radialen Bohrungen, vorzugsweise um 180°, versetzt zueinander angeordnet sind. Da üblicherweise das Dichtungssystem dazu ausgelegt ist, vollständig abzudichten, kann auch Luft, die beim Einbringen des Schmiermittels in die Kammer entweichen muss, nicht durch das Dichtungssystem entweichen, oder nur sehr schwer. Durch das Vorsehen einer zweiten Bohrung kann die von dem Schmiermittel verdrängte Luft aus dem Dichtungssystem ausgebracht werden, so dass die Kammer und auch die Durchgangsbohrungen mit Schmiermittel gefüllt sind. Die bevorzugte 180° Anordnung sorgt dabei zudem dafür, dass sich das Schmiermittel gleichmäßig und blasenfrei in der Kammer und in den Bohrungen ausbreiten kann.

Gemäß einem weiteren bevorzugten Ausführungsbeispiel weist die radiale Bohrung ein erstes radial äußeres Gewinde und ein zweites radial inneres Gewinde auf, wobei das erste Gewinde einen größeren Durchmesser hat als das zweite Gewinde. Eine derartige Ausgestaltung erlaubt eine redundante Verschlussmöglichkeit für die Bohrung, so dass sichergestellt werden kann, dass kein Wasser durch die Bohrung in das Dichtungssystem eindringen kann. Dabei ist insbesondere bevorzugt, dass das zweite Gewinde dazu ausgelegt ist eine, vorzugsweise keglige, Madenschraube aufzunehmen, die dichtend in dem Gewinde aufgenommen ist, während das erste Gewinde mit einem dichtend einschraubbaren Stopfen verschlossen ist.

Gemäß einem weiteren bevorzugten Ausführungsbeispiel weist jeder Dichtungsträger weiterhin mindestens eine Dichtungskörperaufnahmeaussparung auf, die dazu ausgelegt ist, den Dichtungskörper des Dichtelements drehfest aufzunehmen. Diese ist bevorzugt zu einer Stirnseite des ringförmigen Dichtungsträgers offen ausgestaltet und weist eine axiale Tiefe auf, die weniger tief ist als die Bauhöhe des Dichtungskörpers. Beim Vorsehen eines elastomeren Dichtungskörpers kann dadurch erreicht werden, dass die elastomere Verformung beim Einbau des Dichtungssystems die Anlageflächen des Dichtungskörpers dichtend gegen die Anlageflächen in der Aussparung des Dichtungsträgers und an einem benachbarten Element drückt. Dadurch kann zusätzlich eine statische Abdichtung zwischen den Dichtungsträgern erreicht werden.

Alternativ oder zusätzlich kann der Dichtungsträger an zumindest einer Stirnseite weiterhin mindestens eine ringförmige Nut aufweist, die dazu ausgelegt ist, eine statische Dichtung, insbesondere eine O-Ring Dichtung, aufzunehmen.

Bevorzugt sind die Dichtungskörperaufnahmeaussparung und die Dichtlippenaufnahmeaussparung axial voneinander beabstandet an zwei axialen Enden des Dichtungsträgers angeordnet. Dies ermöglicht eine bevorzugte Ausgestaltung, bei der die Dichtlippenaufnahmeaussparung dazu ausgebildet ist, die Dichtlippe eines von einem angrenzend angeordneten Dichtungsträger getragene Dichtelements aufzunehmen.

Dabei ist weiterhin bevorzugt, wenn die Aussparung derart ausgestaltet ist, dass eine Stützwirkung für die Dichtlippe und eine radiale Abstützung für den Dichtungskörper bereitgestellt wird. Dabei sorgt die Stützwirkung für die Dichtlippe dafür, dass die Dichtlippe nicht aufgrund des auf sie wirkenden Drucks "umklappen" kann. Die Abstützung für den Dichtungskörper ermöglicht eine in Richtung der rotierenden Komponente gerichtete radial Abstützung bzw. Halterung des Dichtungskörpers. Dazu können an dem Dichtungsträger entsprechenden Stützelement ausgebildet sein.

Gemäß einem weiteren bevorzugten Ausführungsbeispiel weist mindestens ein Dichtungsträger, vorzugsweise radial innen eine ringförmige axial auskragende Auskragung aufweist, die dazu ausgelegt ist, mit einer komplementär ausgebildet ringförmigen axialen Einkerbung eines angrenzend angeordneten Dichtungsträgers in Eingriff zu gehen. Dadurch kann eine Selbstzentrierung der einzelnen Dichtungsträger erreicht werden. Zudem stellt der Eingriff der Auskragung in der Einkerbung ein weiteres Hindernis für ein Eindringen von Wasser dar.

Dabei ist insbesondere bevorzugt, wenn die ringförmige Auskragung eine axiale Tiefe einer umfänglichen Anlagefläche der Dichtungskörperaufnahmeaussparung für eine radial äußere Mantelfläche des ringförmigen Dichtungskörpers definiert.

Gemäß einem weiteren bevorzugten Ausführungsbeispiel weist der mindestens eine Dichtungsträger an seinem radial äußeren Randbereich mehrere umfänglich verteilte, vorzugsweise mit einem Gewinde versehene, Befestigungsbohrungen auf, die dazu ausgelegt sind, ein Befestigungsmittel zum Befestigen des Dichtungsträger und/oder eine Abdrückschraube zum Demontieren des Dichtungsträgers aufzunehmen. Da durch den hohen Anschraubdruck, der nötig ist, damit der Dichtungsträger und seine Befestigungsgegenpart möglichst wasserdicht aneinander anliegen, und aufgrund von Verschmutzung und etwaiger Korrosion, die beiden Teile nach längerem Gebrauch aneinander "anbacken" können, können sie oftmals nicht beschädigungsfrei voneinander gelöst werden, um beispielsweise ein abgedichtetes Lager zu warten, oder das Dichtungssystem insgesamt auszutauschen. Die Möglichkeit eine Abdrückschraube in den Dichtungsträger einzuschrauben ermöglicht, dass sich der Dichtungsträger von dem Gegenpart abdrückt und so einfach demontiert werden kann.

Sind mehrere Dichtungsträger vorgesehen, die an ihren radial äußeren Randbereichen mehrere umfänglich verteilte Befestigungsbohrungen aufweisen, ist weiterhin bevorzugt, dass die Dichtungsträger unterschiedliche Außendurchmesser aufweisen, wobei die Außendurchmesser derart dimensioniert sind, dass die im radial äußeren Randbereich angeordneten Befestigungsbohrung im eingebauten Zustand des Dichtungssystems frei zugänglich sind. Dadurch kann die Zugänglichkeit und Austauschbarkeit von einzelnen Bauteilen des Dichtungssystems erreicht werden, ohne dass das gesamte Dichtungssystem von der stationären Komponente abgebaut werden muss. Dadurch kann das Dichtungssystem auch unter Wasser gewartet werden.

Weiterhin ist ein Ausführungsbeispiel vorteilhaft, bei dem das Dichtungssystem einen als Befestigungs-Dichtungsträger ausgebildeten Dichtungsträger aufweist, wobei der Befestigungs-Dichtungsträger dazu ausgelegt ist, an einer stationären Komponente der Gezeitenanlage, insbesondere an einem Lagerring einer die abzudichtenden Welle lagernden Lagereinheit oder einem die Lagereinheit aufnehmenden Gehäuse befestigt zu werden. Dabei ist weiterhin vorteilhaft, wenn der Befestigungs-Dichtungsträger an einer der stationären Komponente zugewandten Stirnseite mindestens eine ringförmige Nut aufweist, die dazu ausgelegt ist, eine statische Dichtung, insbesondere eine O-Ring Dichtung, aufzunehmen. Dadurch kann sichergestellt werden, dass Wasser auch nicht an dem Dichtungssystem vorbei in die Unterwasserturbine eindringen kann.

Vorzugsweise ist auch hier eine radial innerhalb der ersten Nut angeordnete zweite ring-förmige Nut vorgesehen, die ebenfalls dazu ausgelegt ist, eine statische Dichtung, insbesondere eine O-Ring Dichtung, aufzunehmen. Dadurch kann auch an dieser abzudichtenden Stelle eine Redundanz geschaffen werden, die zuverlässig verhindert, dass Wasser in die Unterwasserturbine dringen kann.

Gemäß einem weiteren bevorzugten Ausführungsbeispiel ist in dem Befestigungs-Dichtungsträger eine Bohrung vorgesehen, die einen ersten sich radial erstreckenden Bohrungsteil und einen zweiten sich axial erstreckenden Bohrungsteil aufweist, wobei sich der axial erstreckende Bohrungsteil von dem ersten Bohrungsteil bis zu der der stationären Komponente zugewandten Stirnseite erstreckt, so dass der zweite Bohrungsteil radial innerhalb der ersten, und vorzugsweise radial außerhalb der zweiten ringförmigen Nut, in die Stirnseite mündet. Diese Bohrung kann, wie schon die oben angesprochenen, die Kammer fluidisch verbindenden Bohrungen dazu verwendet werden, die statische Dichtung auf ihre Abdichtfähigkeit zu untersuchen. Dafür kann auch in diese Bohrung ein Testfluid eingebracht werden, das beispielsweise mit einem vorbestimmten Druck beaufschlagt wird, bis zu dem die statische Dichtung mindestens abdichten soll.

Gemäß einem weiteren bevorzugten Ausführungsbeispiel weist der Befestigungs-Dichtungsträger an seinem radial äußeren Randbereich mehrere umfänglich verteilte, vorzugsweise mit einem Gewinde versehene, Befestigungsbohrungen auf, die dazu ausgelegt sind, ein Befestigungsmittel zum Befestigen des Befestigungs-Dichtungsträgers an der stationären Komponente und/oder eine Abdrückschraube zum Demontieren des Befestigungs-Dichtungsträgers von der stationären Komponente aufzunehmen. Da durch den hohen Anschraubdruck, der nötig ist, damit der Befestigungs-Dichtungsträger und die stationäre Komponente möglichst wasserdicht aneinander anliegen, und aufgrund von Verschmutzung und etwaiger Korrosion, die beiden Teile nach längerem Gebrauch aneinander "anbacken" können, können sie oftmals nicht beschädigungsfrei voneinander gelöst werden, um beispielsweise ein abgedichtetes Lager zu warten, oder das Dichtungssystem insgesamt auszutauschen. Die Möglichkeit eine Abdrückschraube in den Befestigungs-Dichtungsträger einzuschrauben ermöglicht, dass sich der Dichtungsträger von dem stationären Bauteil abdrückt und so einfach demontiert werden kann.

Weiterhin ist bevorzugt, dass der Befestigungs-Dichtungsträger einen Außendurchmesser aufweist, der größer ist als die Außendurchmesser der anderen Dichtungsträger, wobei vorzugsweise die Außendurchmesser derart dimensioniert sind, dass die im radial äußeren Randbereich angeordneten Befestigungsbohrung im eingebauten Zustand des Dichtungssystems frei zugänglich sind. Dadurch kann das Dichtungssystem als gesamte Einheit an der stationären Komponente befestigt und wieder demontiert werden, ohne dass das Dichtungssystem in seine Einzelteile zerlegt werden muss. Dies ermöglicht auch, dass das Dichtungssystem vor dem Einbau auf seine Dichtfähigkeit untersucht werden kann.

Auf der dem Befestigungs-Dichtungsträger und damit auf der der stationären Komponente abgewandten Seite, also zum umgebenden Wasser hin, weist das Dichtungssystem bevorzugt weiterhin einen als Abdeck-Dichtungsträger ausgebildeten Dichtungsträger auf, wobei der Abdeck-Dichtungsträger dazu ausgelegt ist, das Dichtungssystem gegenüber einer Außenumgebung abzudecken. Dieser Abdeck-Dichtungsträger kann an Stelle einer Seewasserdichtung lediglich eine Partikel-Dichtung aufweisen, die dazu ausgelegt ist, äußere Elemente, wie beispielsweise Staub, Abrieb, Teilchen, und Meeresspezies, wie z. B. Plankton und Algen, an einem Eindringen in das Dichtungssystem zu hindern.

Analog zu dem Befestigungs-Dichtungsträger kann vorzugsweise auch der der Abdeck-Dichtungsträger an seinem radial äußeren Randbereich mehrere umfänglich verteilte, vorzugsweise mit einem Gewinde versehene, Befestigungsbohrungen aufweist, die dazu ausgelegt sind, ein Befestigungsmittel zum Befestigen des Befestigungs-Dichtungsträgers an einem angrenzenden oder einem weiteren Dichtungsträger und/oder eine Abdrückschraube zum Demontieren des Abdeck-Dichtungsträgers von dem angrenzenden Dichtungsträgers aufzunehmen.

Vorteilhafterweise hat der Abdeck-Dichtungsträger einen Außendurchmesser, der kleiner ist als die Außendurchmesser zumindest eines anderen Dichtungsträger. Dadurch kann sichergestellt werden, dass der Abdeck-Dichtungsträger im eingebauten Zustand nicht die Zugänglichkeit zu den anderen Dichtungsträger einschränkt.

Gemäß einem weiteren bevorzugten Ausführungsbeispiel sind zwischen dem Befestigung-Dichtungsträger und dem Abdeck-Dichtungsträger mindestens ein erster Dichtungsträger und ein zweiter weiterer Dichtungsträger vorgesehen, wobei der erste Dichtungsträger an den Befestigungs-Dichtungsträger angrenzend und der zweite Dichtungsträger an den Abdeck-Dichtungsträger angrenzend angeordnet sind. Dadurch kann eine ausreichende Redundanz geschaffen werden, so dass auch beim Versagen eines Dichtelements weitere Dichtelemente vorhanden sind, die ein Eindringen von Wasser in die Unterwasserturbine verhindern. Die Anzahl der weiteren Dichtungsträger kann von dem Einsatzgebiet abhängen. So ist beispielsweise, die Anzahl der Dichtlippen von dem zu erwartenden Wasserdruck und/oder Lebensdauer abhängig.

Analog zu Befestigungs-Dichtungsträger und Abdeckdichtungsträger ist vorteilhafterweise ebenfalls vorgesehen, dass der erste Dichtungsträger, vorzugsweise an seinem radial äußeren Randbereich mehrere umfänglich verteilte, vorzugsweise mit einem Gewinde versehene, Befestigungsbohrungen aufweist, die dazu ausgelegt sind, ein Befestigungsmittel zum Befestigen des ersten Dichtungsträger an dem Befestigungs-Dichtungsträgers und/oder eine Abdrückschraube zum Demontieren des ersten Dichtungsträgers von dem Befestigungs-Dichtungsträgers aufzunehmen und/oder der zweite Dichtungsträger, vorzugsweise an seinem radial äußeren Randbereich, mehrere umfänglich verteilte, vorzugsweise mit einem Gewinde versehene, Befestigungsbohrungen aufweist, die dazu ausgelegt sind, ein Befestigungsmittel zum Befestigen des zweiten Dichtungsträger an dem ersten Dichtungsträgers und/oder eine Abdrückschraube zum Demontieren des zweiten Dichtungsträgers von dem ersten Dichtungsträgers aufzunehmen.

Alternativ kann auch vorgesehen sein, dass der zweite Dichtungsträger keine eigene Verschraubung aufweist, sondern die Befestigungsöffnungen dazu ausgelegt sind die Befestigungsmittel des Abdeck-Dichtungsträgers aufzunehmen, so dass der zweite Dichtungsträger und der Abdeck-Dichtungsträger zusammen an dem Befestigungs-Dichtungsträger angeschraubt sind. Die Möglichkeit des Einschraubens einer Abdrückschraube kann auch in diesem Ausführungsbeispiel separat für den zweiten Dichtungsträger vorgesehen sein.

Wie oben erwähnt, ermöglicht dies zum einen dass das Dichtungssystem als Einheit an der stationären Komponente befestigt werden kann, zum anderen aber auch, dass einzelnen Bauteile des Dichtungssystems ausgetauscht werden können, ohne dass das gesamte Dichtungssystem von der stationären Komponente abgebaut werden muss. Dadurch kann das Dichtungssystem auch unter Wasser gewartet werden.

Gemäß einem weiteren bevorzugten Ausführungsbeispiel weist zumindest der erste Dichtungsträger einen Außendurchmesser auf, der größer ist als der Außendurchmesser des zweiten Dichtungsträgers, wobei vorzugsweise die Außendurchmesser derart dimensioniert sind, dass die im radial äußere Randbereich angeordneten Befestigungsbohrungen im eingebauten Zustand des Dichtungssystems frei zugänglich sind. Auch dadurch kann die Zugänglichkeit und Austauschbarkeit von einzelnen Bauteilen des Dichtungssystems erreicht werden, ohne dass das gesamte Dichtungssystem von der stationären Komponente abgebaut werden muss. Dadurch kann das Dichtungssystem auch unter Wasser gewartet werden.

Sind der zweite Dichtungsträger und der Abdeck-Dichtungsträger zusammen montierbar ausgestaltet, ist vorteilhaft, dass ihre Außendurchmesser gleich sind.

Wie oben erwähnt laufen die Dichtlippen des Dichtungssystems an einer Gegenlauffläche an. Diese Gegenlauffläche kann durch die rotierbare Komponente selbst gebildet sein, da jedoch durch das Anlaufen der Dichtlippen ein Verschleiß, insbesondere eine Rillenbildung auf der Gegenlauffläche entstehen kann, ist es, insbesondere bei der Abdichtung von Wellen, bevorzugt eine Anlaufhülse zu verwenden, drehfest an dem rotierbaren Element, insbesondere an der Welle, angebracht ist.

Dabei ist ein Ausführungsbeispiel vorteilhaft, bei dem die Anlaufhülse auf die Welle aufgepresst ist. Der Vorteil der Presspassung ist, dass die Anlaufhülse deutlich platzsparender ausgestaltet werden kann, da auf einen Flansch zum Befestigen der Hülse verzichtet werden kann. Zudem kann dadurch erreicht werden, dass weniger Kosten entstehen, da auf eine Material- und arbeitsintensive Ausgestaltung mit Flansch und Schrauben verzichtet werden kann.

Um die Unterwasserturbine auch entlang der Anlaufhülse gegen einen Wassereinritt abzudichten kann vorzugsweise die Anlaufhülse an ihrer inneren Mantelfläche mindestens eine ringförmige Nut aufweisen, die dazu ausgelegt ist, eine statische Dichtung, insbesondere eine O-Ring Dichtung, aufzunehmen. Vorzugsweise ist auch hier eine im Vergleich zur ersten Nut axial in Richtung der stationären Komponente versetzte zweite ringförmige Nut vorgesehen, die ebenfalls dazu ausgelegt ist, eine statische Dichtung, insbesondere eine O-Ring Dichtung, aufzunehmen. Dadurch kann auch an dieser abzudichtenden Stelle eine Redundanz geschaffen werden, die zuverlässig verhindert, dass Wasser in die Unterwasserturbine dringen kann.

Die Anlaufhülse kann axial verschiebbar ausgebildet sein, so dass die Dichtlippen nach einer Wartung an einer axial versetzten Stelle anlaufen. Dadurch kann erreicht werden, dass die Anlaufhülse nicht vollständig von der Welle bzw. der rotierbaren Komponente entfernt werden muss, was eine zeitaufwändige und komplizierte Wartungsarbeit darstellt.

Um die axiale Verschiebbarkeit bei der aufgepressten Anlaufhülse zu erleichtern, ist weiterhin in der Anlaufhülse eine Bohrung vorgesehen ist, die einen ersten sich axial erstreckenden Bohrungsteil und einen zweiten sich radial erstreckenden Bohrungsteil aufweist, wobei der sich radial erstreckende Bohrungsteil von dem ersten Bohrungsteil bis zu der inneren Mantelfläche erstreckt, so dass der zweite Bohrungsteil im eingebauten Zustand zwischen der stationären Komponenten und der ringförmigen Nut, vorzugsweise zwischen erster und zweiter ringförmiger Nut, in die innere Mantelfläche mündet. Dabei ist vorzugsweise die Mündung mittig in der Anlaufhülse angeordnet. In diese Bohrung ist für die axiale Verschiebbarkeit ein Schmiermittel, insbesondere ein Öl einbringbar, das sich an der Kontaktfläche zwischen Anlaufhülse und rotierbarer Komponente anlagert und die axiale Verschiebbarkeit erleichtert.

Gleichzeitig kann diese Bohrung auch dazu verwendet werden, die Abdichtfähigkeit der statischen Dichtung zu testen. Dazu kann, wie oben bereits beschrieben ein Testfluid eingebracht werden, das beispielsweise mit einem vorbestimmten Druck beaufschlagt wird, bis zu dem die statische Dichtung auf jeden Fall abdichten soll.

Gemäß einem weiteren bevorzugten Ausführungsbeispiel weist die Anlaufhülse mindestens eine zweite Bohrung auf, die einen ersten sich axial erstreckenden Bohrungsteil und einen zweiten sich radial erstreckenden Bohrungsteil aufweist, wobei der sich radial erstreckende Bohrungsteil von dem ersten Bohrungsteil bis zu der äußeren Mantelfläche erstreckt. Diese zweite Bohrung ist fluidisch mit einer der Schmiermittel aufnehmenden Kammern des Dichtungssystems verbunden. Durch diese Durchgangsbohrung kann Schmiermittel auch über die Anlaufhülse in die Kammer eingebracht werden. Zudem kann die Bohrung dazu verwendet werden, eingedrungenes Wasser aus dem Dichtungssystem zu entfernen. Weiterhin kann auch die Bohrung in der Anlaufhülse dazu verwendet werden, nach einem Einbau des Dichtungssystems in die Unterwasserturbine, die Abdichtfähigkeit der Dichtlippe zu testen. Dazu kann beispielsweise an der Durchgangsbohrung ein Vakuum angelegt werden, oder ein Testfluid eingebracht werden.

Ebenfalls ist vorteilhaft, wenn in der Durchgangsbohrung oder in der Kammer ein Sensor angeordnet ist, der einen Eintritt von Wasser in die Kammer oder in die Bohrung detektiert und vorzugsweise an ein Überwachungssystem übermitteln kann.

Analog zum Dichtungsträger ist auch bei der Anlaufhülse bevorzugt, wenn die Anlaufhülse zwei zweite Durchgangsbohrungen aufweist, die fluidisch mit der Kammer verbunden sind, wobei die zwei zweiten Bohrungen, vorzugsweise um 180°, versetzt zueinander angeordnet sind. Da üblicherweise das Dichtungssystem dazu ausgelegt ist vollständige abzudichten, kann auch Luft, die beim Einbringen des Schmiermittels in die Kammer entweichen muss, nicht durch das Dichtungssystem entweichen, oder nur sehr schwer. Durch das Vorsehen einer versetzten Bohrung kann die von dem Schmiermittel verdrängte Luft aus dem Dichtungssystem ausgebracht werden, so dass die Kammer und auch die Durchgangsbohrungen mit Schmiermittel gefüllt sind. Die bevorzugte 180° Anordnung sorgt dabei zudem dafür, dass sich das Schmiermittel leicht und blasenfrei in der Kammer und in den Bohrungen ausbreiten kann.

Weiterhin ist ein Ausführungsbeispiel vorteilhaft, bei dem alle Kammern des Dichtungssystems über Bohrungen in der Anlaufhülse für das Einbringen eines Schmiermittels bzw. eines Testfluids oder das Anlegen eines Vakuums verbunden sind, wobei dann in den Dichtungsträgern keine Bohrungen vorgesehen sind. Auch in diesem Ausführungsbeispiel kann jeweils ein Zulauf und ein Ablauf vorgesehen sein - also eine weitere zentral axial Bohrung mit entsprechenden vorzugsweise um 180° versetzten Abzweigungen.

Gemäß einem weiteren bevorzugten Ausführungsbeispiel weist die mindestens eine Bohrung in der Anlaufhülse ein erstes axial äußeres Gewinde und ein zweites axial inneres Gewinde auf, wobei das erste Gewinde einen größeren Durchmesser hat als das zweite Gewinde. Eine derartige Ausgestaltung erlaubt eine redundante Verschlussmöglichkeit für die Bohrung, so dass sichergestellt werden kann, dass kein Wasser durch die Bohrung in das Dichtungssystem eindringen kann. Dabei ist insbesondere bevorzugt, dass das zweite Gewinde dazu ausgelegt ist, eine, vorzugsweise keglige Madenschraube aufzunehmen, die dichtend in das innen liegende zweite Gewinde einschraubbar ist, während das erste Gewinde mit einem dichtenden einschraubbaren Stopfen verschlossen ist.

Gemäß einem weiteren bevorzugten Ausführungsbeispiel ist weiterhin an dem Dichtungssystem, insbesondere an dem Abdeck-Dichtungsträger eine Opferanode angebracht, die die Dichtungssystem vor Korrosion schützt.

Dabei ist insbesondere bevorzugt, wenn die Opferanode an der optional angebrachten Anlaufhülse und/oder an dem Abdeck-Dichtungsträger befestigt ist. Dabei kann die Opferanode auch über ein Distanzelement an der Anlaufhülse befestigt sein, wobei das Distanzelement einen Abstand zu einem weiteren an der Welle angeordneten Bauteil, wie beispielsweise einem Rotor oder Rotorblatt reduziert und so dafür sorgt, dass die axiale Verschiebbarkeit der Anlaufhülse axial begrenzt ist. Bei der aufgepressten Anlaufhülse kann so sichergestellt werden, dass sich die Anlaufhülse auch nicht aufgrund von Alterserscheinungen, wie beispielsweise einer material- und altersbedingten Weitung, auf der Welle verschiebt.

Das Dichtungssystem kann an verschiedensten Stellen der Unterwasserturbine eingesetzt werden. Insbesondere bevorzugt ist es an einem Schwenksystem (Pitch) für eine Einstellung der Rotorblattstellung, für eine Hauptwellendichtung zwischen Rotorwelle und Gondel und/oder einem Schwenksystem (yaw) für die Verdrehung der Gondel einsetzbar.

Die Lagereinheiten, die die rotierbare Komponente, insbesondere die Welle lagern und die mit Hilfe des Dichtungssystems abgedichtet werden können, können Wälzlager oder Gleitlager sein. Ebenfalls können sie eine Drehverbindung für die Verdrehung des Rotorblatts bzw. der Gondel ausbilden.

Gemäß einem bevorzugten Ausführungsbeispiel ist das Dichtungssystem an dem Schwenksystem für die an einer Rotornabe angebrachten Rotorblätter eingesetzt. Dabei ist insbesondere vorteilhaft, wann die Lageranordnung nicht als Schwenklager mit einem massiv und groß dimensionierten Lageraußenring ausgebildet ist, sondern als eine Lageranordnung mit zwei voneinander beabstandeten Lagereinheiten ausgebildet ist. Dabei dient die Rotornabe als Lagergehäuse und das Dichtungssystem ist direkt an der Rotornabe angebracht und nicht, wie im Stand der Technik an dem Lageraußenring des Schwenklagers. Dabei ist zwar die Rotornabe an sich kein stationäres Bauteil, aber die Rotornabe ist stationär in Hinsicht auf die Drehung des Rotorblatts. Die Wellenlagerung kann beispielsweise als eine Kombination aus Los- und Festlager, oder eine Kombination aus zwei angestellten Kegelrollenlagern ausgebildet sein..

Ein weiterer Aspekt vorliegender Erfindung betrifft eine Lageranordnung für eine Unterwasserturbine, insbesondere einer Gezeitenanlage, die ein oben beschriebenes Dichtungssystem aufweist.

Ein noch weiterer Aspekt der Erfindung betrifft eine Unterwasserturbine mit einem oben beschriebenen Dichtungssystem.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
- Fig. 1:: eine erste Schnittansicht durch ein bevorzugtes Ausführungsbeispiel eines Dichtungssystems;
- Fig. 2:: eine zweite Schnittansicht durch das bevorzugtes Ausführungsbeispiel des Dichtungssystems aus Fig. 1;
- Fig. 3:: eine dritte Schnittansicht durch das bevorzugtes Ausführungsbeispiel des Dichtungssystems aus Fig. 1; und
- Fig. 4:: eine vierte Schnittansicht durch das bevorzugtes Ausführungsbeispiel des Dichtungssystems aus Fig. 1.

Im Folgenden werden gleiche oder funktionell gleichwirkende Elemente mit denselben Bezugszeichen gekennzeichnet.

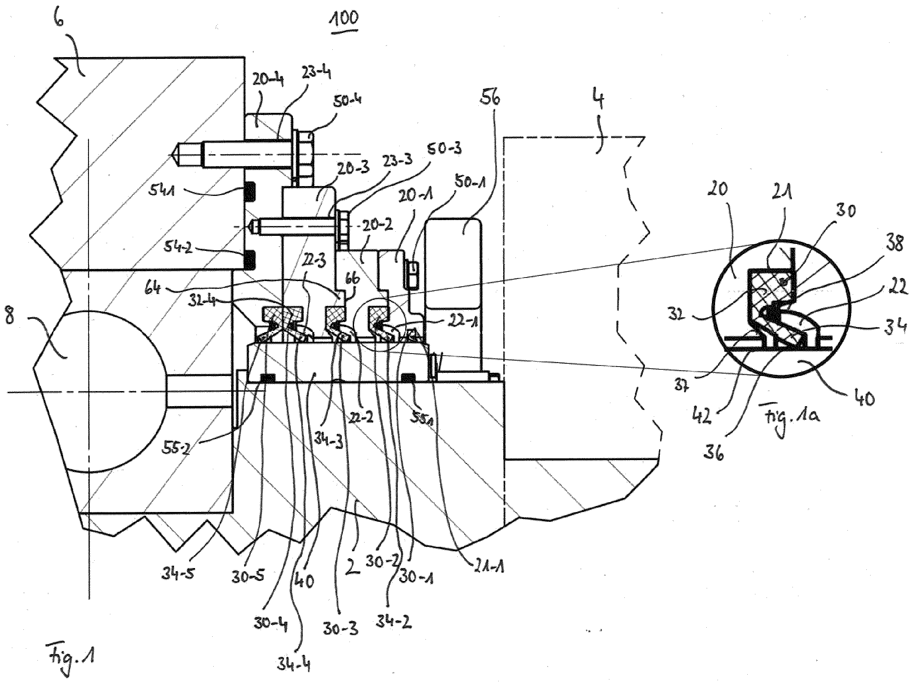

Die Figuren 1 bis 4 zeigen verschiedene Schnittansichten durch verschiedene Schnittebenen eines bevorzugten Ausführungsbeispiels eines Dichtungssystems 100 zum Abdichten einer rotierbaren Komponente einer Unterwasserturbine. In den dargestellten Figuren ist das Dichtungssystem 100 für eine Abdichtung einer Lagerung eines verdrehbaren Rotorblatts ausgelegt. Das Dichtungssystem 100 kann aber für alle Abdichtungen verwendet werden, wie beispielsweise ebenfalls eine Rotorwellenhauptlagerung oder eine Lagerung für eine Verdrehung einer Gondel.

In dem in den Figuren dargestellten Ausführungsbeispiel ist das Dichtungssystem 100, wie oben erwähnt, für die Lagerung einer Rotorblattwelle 2 ausgelegt, an der Rotorblätter 4 drehfest befestigt sind. Die Rotorblattwelle 2 wiederrum ist in einer Rotornabe 6 drehbar gelagert, wobei für die Lagerung Lageranordnungen 8 vorgesehen sind. Als Lagereinheiten können Wälzlager oder Gleitlager verwendet werden. Die hier schematisch als Wälzlager dargestellten Lagereinheiten 8 sind lediglich rein schematisch als Platzhalter für beliebige Lagerarten anzusehen.

Das Dichtungssystem 100 weist wiederrum mehrere ringförmige Dichtungsträger 20-1, 20-2, 20-3, 20-4 auf. Jeder Dichtungsträger 20 ist dazu ausgelegt mindestens ein dynamisches Dichtelement 30 zu tragen, wobei die Dichtelemente 30 in zugehörigen Dichtungskörperaufnahmeaussparungen 21, die an den jeweiligen Dichtungsträgern 20 ausgebildet sind, angeordnet sind.

Die dynamischen Dichtelemente 30 weisen, wie der Detailansicht von Fig. 1a zu entnehmen, jeweils einen Dichtungskörper 32 und eine Dichtlippe 34 auf, wobei der Dichtungskörper 32 ringförmig ausgebildet ist und in der Aussparung 21 aufgenommen ist, während sich die Dichtlippen 34 radial nach innen in Richtung der Welle 2 erstrecken. Weiterhin weisen die Dichtelemente 30 eine Lauffläche 36 auf mit der die Dichtelemente an einer Gegenlauffläche 42 anlaufen. Die Gegenlauffläche 42 ist in diesem dargestellten Ausführungsbeispiel durch eine Anlaufhülse 40 gebildet, es könnte jedoch auch sein, dass die Dichtlippen 34 direkt an der Welle 2 anliegen.

Weiterhin zeigt Fig. 1a, dass der Dichtungsträger 20 ein erste Stützelement 37 und ein zweites Stützelement 38 aufweisen, die dazu ausgelegt sind, die Dichtlippe bzw. den Dichtungskörper 32 zu unterstützen und zu tragen. Dabei ist das Stützelement 37 dazu ausgelegt, die Dichtlippe 34 abzustützen und auch bei einem hohen Wasserdruck auf die Dichtlippe dafür zu sorgen, dass die Dichtlippe 34 nicht "umklappt", sich also in Richtung abzudichtender Seite umbiegt. Das Stützelement 38 dient dazu, den Dichtungskörper 32 radial innen abzustützen und so zusammen mit dem angrenzenden Dichtungsträger einen engen Aufnahmeraum für den Dichtungskörper 32 zu schaffen, so dass der Dichtungskörper 32 drehfest und statisch dichtend in dem Dichtungssystem aufgenommen ist.

Um ein möglichst kompaktes Dichtungssystem auszubilden, sind weiterhin an den Dichtungsträgern Dichtlippenaufnahmeaussparungen 22 ausgebildet, die eine Dichtlippe eines von dem Dichtungsträger selbst getragenen Dichtelement (siehe Dichtungsträger 20-3 und 20-4) oder eine Dichtlippe eins von einem angrenzenden Dichtungsträger getragene Dichtelements (siehe Dichtungsträger 20-1 und 20-2) aufnehmen können.

Wie weiterhin dem Ausführungsbeispiel zu entnehmen, sind in dem Dichtungssystem verschiedene dynamische Dichtelemente 30 vorgesehen, die unterschiedliche Dichtungsaufgaben erfüllen. So ist das Dichtelement 30-1 als Partikeldichtung ausgebildet, die in dem Dichtungssystem 100 dafür sorgt, dass Verunreinigungen darin gehindert werden, in das Dichtungssystem 100 einzutreten. Die Dichtungen 30-2 bis 30-4 dagegen sind als sogenannte Seewasserdichtungen ausgebildet und weisen Dichtlippen-Geometrien und Materialien auf, die dafür sorgen, dass Wasser an einem Eintritt in die Rotornabe 6 gehindert wird. Dazu sind die Dichtlippen 34 der Seewasserdichtungen insbesondere in Richtung des Rotorblatt 4 gerichtet.

Das Dichtelement 30-5 dagegen dient dazu Schmiermittel, das in der Lagereinheit 8 verwendet wird, in der Lagereinheit 8 zu halten und an einem Austritt aus der Lagereinheit in das Dichtungssystem 100 zu hindern. Aus diesem Grund ist die Dichtlippe 34-5 des Dichtelements 30-5 in Richtung der Lagereinheit 8 gerichtet. Die Dichtungskörperaufnahmeaussparung 21 kann, wie bei dem Dichtungsträger 20-1 gezeigt, als Nut 21-1 ausgebildet sein, sie kann jedoch auch als eine zur Stirnfläche offene Aussparung ausgebildet sein, wie bei den Dichtungsträgern 20-2 bis 20-4 gezeigt.

Der Dichtungsträger 20-1 ist in dem dargestellten Ausführungsbeispiel als Abdeck-Dichtungsträger ausgebildet, während der Dichtungsträger 20-4 als Befestigungs-Dichtungsträger ausgebildet ist, der in dem dargestellten Ausführungsbeispiel direkt an der Rotornabe 6 befestigt ist. Abhängig von der Ausgestaltung der Lagereinheit 8 kann der Befestigungs-Dichtungsträger auch direkt an einem Lagerring befestigt sein.

Wie oben erwähnt, weisen die Dichtungsträger 20 Aussparungen 22 auf, die dazu ausgelegt sind eine eigene oder eine benachbarte Dichtlippe 34 aufzunehmen. In dem dargestellten Ausführungsbeispiel ist in der Aussparung 22-1 die Dichtlippe 34-2 des zweiten Dichtelements 30-2 aufgenommen, und in der Aussparung 22-2 die Dichtlippe 34-3 des vom dritten Dichtungsträger 20-3 getragenen Dichtelement 30-3.

Die Aussparungen 22-3 bzw. 22-4 dagegen sind dazu ausgelegt, Dichtlippen eines von dem gleichen Dichtungsträger getragenen Dichtelements aufzunehmen. So trägt der Dichtungsträger 20-3 sowohl den Dichtungskörper 32-4 des Dichtelements 30-4 und weist gleichzeitig eine Aussparung 22-3 auf, in der die Dichtlippe 34-4 desselben Dichtelements 30-4 aufgenommen ist. Selbiges gilt für den Dichtungsträger 20-4.

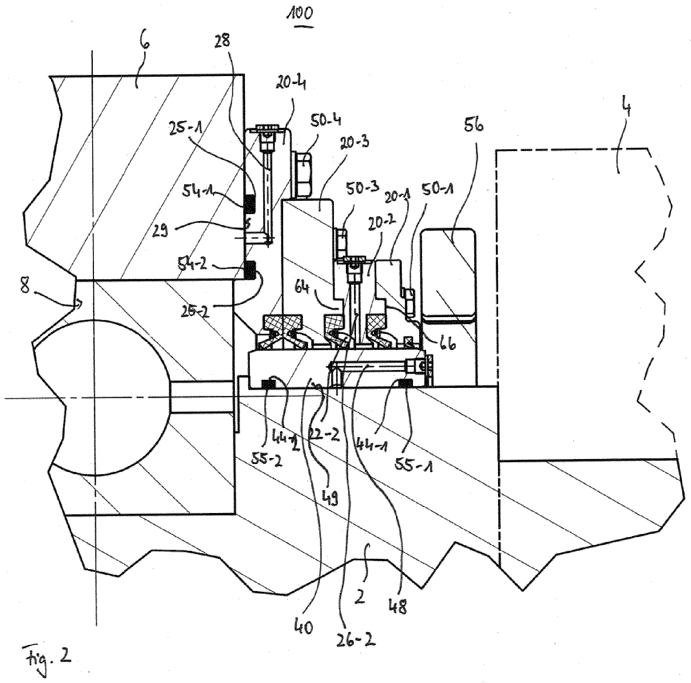

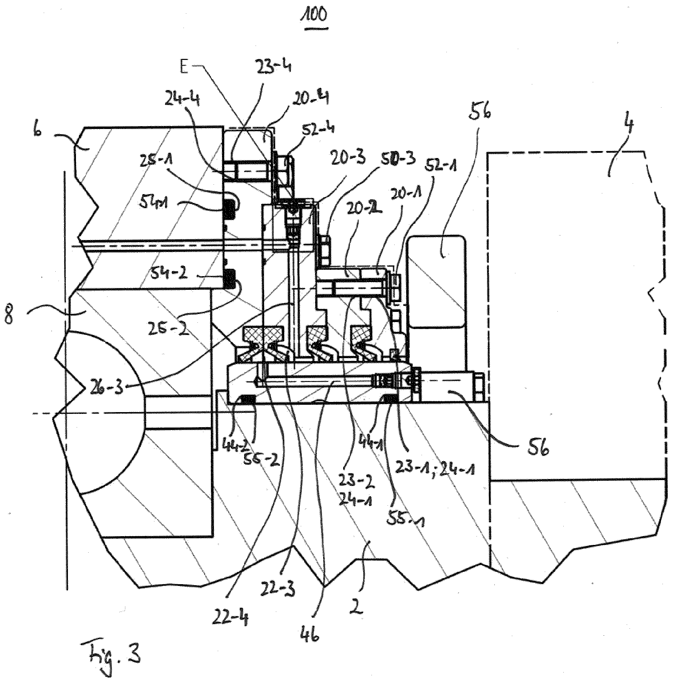

In dem in den Figuren 1-3 gezeigten Ausführungsbeispiel ist weiterhin zu sehen, dass an den Dichtungsträgern 20 in einem radial äußeren Randbereich Befestigungsbohrungen 23 vorgesehen sind. Die Befestigungsbohrungen sind dabei derart ausgelegt, dass sie entweder für die Aufnahme eines Befestigungsmittels, insbesondere einer Schraube 50, (siehe Fig. 1 und Fig. 3) oder einer sogenannten Abdrückschraube 52 (siehe Fig. 2) ausgelegt sind. Dazu kann in der Öffnung ein Gewinde 24 vorgesehen sein, es ist jedoch auch möglich, dass die Öffnung eine glatte Bohrung ist. Vorzugsweise ist in den Befestigungsbohrungen 23, die für die Aufnahme einer Schraube 50 vorgesehen sind, kein Gewinde vorgesehen, sondern nur in den Befestigungsbohrungen 23 die für die Aufnahme der Abdrückschraube 52 dienen.

In der dargestellten Schnittansicht der Figur 2 ist lediglich der Abdeck-Dichtungsträger 20-1 und der Befestigungs-Dichtungsträger mit einer Abdrückschraube 52 ausgestattet. Diese kann aber auch an den dazwischen angeordneten Dichtungsträgern 20-2 und 20-3 vorgesehen sein.

Die Abdrückschrauben 52 dienen dazu, den jeweiligen Dichtungsträger 20 von seinem Befestigungspartner, in dem Fall der Rotornabe 6 bzw. der Dichtungsträger 20-3, zu demontieren. Da nach einem gewissen Zeitraum die Verbindung zwischen den Dichtungsträgern 20 und ihren jeweiligen Befestigungspartner derartig fest ist, ist eine beschädigungsfreie Demontage der Dichtungsträgerringe zu Wartungszwecken oftmals nicht möglich. Mithilfe der Abdrückschrauben 52 kann der Dichtungsträger 20 jedoch beschädigungsfrei von dem jeweiligen Befestigungspartner gelöst werden. Dabei wird die Abdrückschraube 52 in das Gewinde 24 eingeschraubt, wobei die Abdrückschraube 52 selbst eine längere axiale Länge aufweist als der Dichtungsträger 20 selbst, so dass die Abdrückschraube 52 an dem jeweilig anderen Befestigungspartner anstößt und bei weiterer Feststellung den Dichtungsträger 20 von dem jeweiligen Befestigungspartner wegdrückt.

Weiterhin ist den Figuren zu entnehmen, dass der Dichtungsträger 20-2 mit Hilfe des Abdeck-Dichtungsträgers 20-1 an dem angrenzenden Dichtungsträger 20-3 angeschraubt ist. Selbstverständlich wäre es aber auch möglich den Dichtungsträger 20-2 eigenständig anzuschrauben. Weiterhin ist dem Ausführungsbeispiel zu entnehmen, dass die Befestigungsbohrungen in einem radial äußeren Randbereich der Dichtungsträger 20 vorgesehen sind. Es ist außerdem zu bemerken, dass auch der Dichtungsträger 20-2 bzw. der Dichtungsträger 20-3 nicht nur an dem angrenzenden Dichtungsträger 20-3 bzw. 20-4 anschraubbar sind, sondern auch über einen oder mehrere Dichtungsträger hinweg an einem weiteren Element befestigbar sind. Die hier dargestellte Ausführungsform hat jedoch den Vorteil, dass das Dichtungssystem 100 als vorgefertigte Einheit direkt an der Rotornabe 6 angeschraubt werden kann

Weiterhin ist in den gezeigten Figuren zu sehen, dass der Befestigungsdichtungsträger 20-4 den größten Außendurchmesser aufweist und die angrenzenden Dichtungsträger 20-3 bzw. 20-2 und 20-1 einen kleineren Außendurchmesser zeigen. Dadurch können die Befestigungsbohrungen 23, die in den jeweiligen Dichtungsträgern 20 in dem radialen äußeren Bereich angeordnet sind, auch in eingebautem Zustand frei zugänglich sein. Analog zu den Befestigungsdichtungsträger 20-4 ist auch der benachbarte Dichtungsträger 20-3 Außendurchmesser mäßig größer als der angrenzende Dichtungsträger 20-2 ausgestaltet.

Der Dichtungsträger 20-2 und der Abdeck-Dichtungsträger 20-1 haben in dem dargestellten Ausführungsbeispiel den gleichen Außendurchmesser und werden gemeinsam an dem ersten Dichtungsträger 20-3 befestigt. Selbstverständlich wäre es ebenfalls möglich auch hier eine Abstufung zwischen dem zweiten Dichtungsträger 20-2 und dem Abdeckdichtungsträger 20-1 vorzusehen und auch den Dichtungsträger 20-2 separat nochmal an den Dichtungsträger 20-3 zu befestigen.

Weiterhin zeigen die Figuren 1-3, dass für eine Abdichtung zwischen den drehfest verbunden Elementen, nämlich zwischen dem Befestigungs-Dichtungsträger 20-4 und der Rotornabe 6, bzw. zwischen der Anlaufhülse 40 und der Welle 2 statische Dichtungen 54, 55 in Form beispielsweise von O-Ringen angeordnet sind. Dazu weist der Befestigungsdichtungsträger 20-4 ringförmige Nuten 25 auf, in die O-Ringe 54 eingelegt werden können. Gleichermaßen weist die Anlaufhülse 40 Nuten 44 auf, in die die O-Ringe 55 eingelegt werden können (siehe insbesondere Fig: 2 und 3). Derartige statische Dichtungen können auch an den anderen Dichtungsträgern vorgesehen sein.

Um das Dichtungssystem 100 zusätzlich vor Korrosion zu schützen ist weiterhin eine Opferanode 56 vorgesehen, die angrenzend an das Dichtungssystem 100 und die Anlaufhülse 40 angeordnet ist. Weiterhin zeigt Figur 1, dass die Opferanode 56 von einem Distanzelement 58 (siehe Fig. 3) getragen ist, das derart dimensioniert ist, dass ein Abstand zwischen Distanzelement 58 und Rotorblatt 4 minimiert ist. Dadurch kann sichergestellt werden, dass die Anlaufhülse 40 nur ein begrenztes axiales Spiel hat, was wiederrum dafür sorgt, dass ungewollten axiale Verschiebungen und damit eine Verschlechterung der Dichteigenschaften verhindert wird. Dies sorgt insbesondere bei der unter Presspassung aufgenommen Anlaufhülse für die bevorzugte Redundanz.

Um einen Verschleiß der Dichtlippen 34 und der Anlaufhülse 40 möglichst gering zu halten, ist eine möglichst reibfreie Anlaufbedingung zwischen Dichtlippe 34 und Gegenlauffläche 42 zu schaffen. Dazu können die Dichtlippen 34 bzw. allgemein das Dichtelement 30 aus einem Material gefertigt, das einen Festschmierstoff in eingebetteter Form enthält oder die aus einem Festschmierstoffmaterial gefertigt sind. Ebenfalls ist möglich, dass die Dichtlippen 34 mit einer Festschmierstoffbeschichtung versehen sind. Um diese Schmierfähigkeit zu unterstützen und/oder um in der Materialwahl der Dichtlippen 34 eine größere Freiheit zu erzielen, aber gleichzeitig eine möglichst reibfreie Anlagesituation zu schaffen, wird vorgeschlagen, zusätzlich Schmiermittel in das Dichtungssystem einzubringen. Dazu wird in dem dargestellten Ausführungsbeispiel, Schmiermittel in eine Kammer in dem Dichtungsträger 20 eingebracht. Dabei kann die Kammer als eigenständige Aussparung ausgebildet sein.

In dem in den Fig. 1-3 dargestellten Ausführungsbeispiel ist an dem Dichtungsträger 20 bereits eine Aussparung, nämlich die Dichtlippenaufnahmeaussparung 22, vorhanden. Diese dient in dem dargestellten Ausführungsbeispiel als Kammer und kann dazu verwendet werden, mit Schmiermittel gefüllt zu werden, um die Reibung der Dichtlippen 34 auf der Gegenlauffläche 42 zu verringern.

Um Schmiermittel in die Kammer 22-2 und 22-3 einzubringen, sind deshalb weiterhin in den Dichtungsträgern 20-2 und 20-3, wie in den Figuren 2 und 3 gezeigt, radial angeordnete Durchgangsbohrungen 26-2 und 26-3 vorgesehen, die die Kammern 22-2 und 22-3 fluidisch mit einer Außenumgebung verbinden. Um die Kammer 22-4 mit Schmiermittel zu versorgen, ist in dem gezeigten Ausführungsbeispiel weiterhin, wie in Figur 3 gezeigt, in der Anlaufhülse 40 eine winklige Durchgangsbohrung 46 vorgesehen, die dazu dient Schmiermittel in die Kammer 24-4 einzubringen.

Das Schmiermittel kann zum einen dazu dienen, einen auf die Dichtlippen 34 wirkenden Wasserdruck auszugleichen und gleichzeitig dafür sorgen, dass eine ausreichende Schmierung zwischen Gegenlauffläche 42 und Dichtlippe 34 gegeben ist. Zum anderen kann das Schmiermittel das Dichtungssystem 100 vollständig ausfüllen, so dass alle Hohlräume mit Schmiermittel gefüllt sind. Dadurch kann erreicht werden, dass das Schmiermittel die Dichtlippen 34 auf beiden Seiten mit dem gleichen Druck beaufschlagt und gleichzeitig verhindert, dass Wasser in das Dichtungssystem 100 eindringen kann, da sämtliche Hohlräume mit Schmiermittel gefüllt sind. Um in ein derartiges Dichtungssystem 100 einzudringen, müsste das Wasser neben dem Überwinden der Dichtlippen 34 auch noch das Schmiermittel aus dem Dichtungssystem 100 verdrängen.

Dabei ist insbesondere bevorzugt, dass in dem jeweiligen Dichtungsträger 20 bzw. der Anlaufhülse 40 nicht nur eine einzelne Durchgangsbohrung 26 bzw. 46 vorgesehen ist, sondern jeweils zwei Durchgangsbohrungen vorgesehen sind, die um 180° versetzt an dem Dichtungsträger 20 bzw. der Anlaufhülse 40 angeordnet sind, so dass Schmiermittel blasenfrei und gleichmäßig in dem Dichtungssystem 100 verteilbar ist.

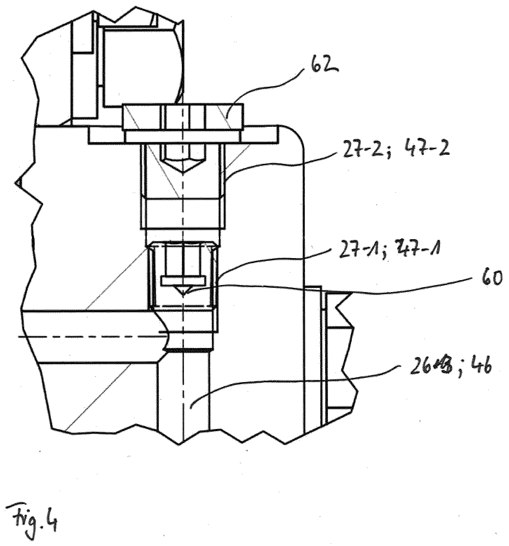

Um nach dem Einbringen des Schmiermittels die Durchgangsbohrungen 26, 46 fluiddicht gegenüber der Wasserumgebung abzuschließen, weisen die Durchgangsbohrungen 26, 46, wie in Figur 4 dargestellt, zudem ein erstes Gewinde 27-1, 47-1 und ein zweites Gewinde 27-2, 47-2 auf, die unterschiedliche Größen aufweisen. So ist das erste Gewinde 27-1, 47-1 durchmessermäßig kleiner ausgebildet als das zweite Gewinde 27-2, 47-2. In das erste Gewinde 27-1, 47-1, das radial weiter innen angeordnet ist, kann eine, vorzugsweise kegelige, Madenschraube 60 dichtend eingeschraubt werden, während in das äußere Gewinde 27-2, 47-2 ein einschraubbarer Verschlussstopfen 62 dichtend eingeschraubt wird. Auch dadurch kann eine Redundanz geschaffen werden, die auch unter widrigsten Bedingungen dafür sorgt, dass Wasser nicht in das Dichtungssystem 100 eindringen kann.

Die Durchgangsbohrung 26, 46 können aber auch dazu verwendet werden, das Dichtungssystem 100 auch auf seine Dichtheit zu überprüfen. Dazu kann an den Durchgangsbohrungen 26, 46 jeweils ein Vakuum angelegt werden, mit dem überprüft wird, ob die Dichtlippen 34 dichtend anliegen. Dies ermöglicht, dass auch nach dem Einbau des Dichtungssystems 100 und vor einer Wasserung der Unterwasserturbine überprüft werden kann, ob die Montage des Dichtungssystems 100 korrekt erfolgt ist. Statt Vakuum kann selbstverständlich auch ein Testfluid verwendet werden, das mit einem bestimmten Druck in das Dichtungssystem 100 eingebracht wird.

Neben der Dichtigkeitsprüfung für die dynamischen Dichtelemente 34 kann auch die statische Dichtung 54, 55 einer Dichtigkeitsprüfung unterzogen werden. Dazu weist das Dichtungssystem 100, wie in Figur 2 dargestellt in dem Befestigungsdichtungsring 20-4 und der Anlaufhülse 40 Bohrungen 28 bzw. 48 auf, die winklig ausgestaltet sind und im Fall des Befestigungsdichtungsträgers 20-4 an einer Stirnseite 29 zwischen den beiden statischen Dichtungen 54-1 54-2 mündet. Im Fall der Anlaufhülse 40 mündet die Durchgangsbohrung 48 dagegen in einer inneren Mantelfläche 49. Über die Durchgangsbohrungen 28 bzw. 48 ist ebenfalls ein Testfluid einbringbar, oder ein Vakuum anlegbar, um die Dichtheit der statischen Dichtungen 54, 55 zu überprüfen.

Weiterhin kann in die Durchgangsbohrung 48, die in der Anlaufhülse 40 ausgebildet ist, auch ein Schmiermittel eingebracht werden, das sich auf der Kontaktfläche zwischen Anlaufhülse 40 und Welle 2 verteilt, so dass eine axiale Verschiebbarkeit der Anlaufhülse 40 gegeben ist. Dies ist insbesondere dann vorteilhaft, wenn die Anlaufhülse 40 von der Welle 2 demontiert werden soll, oder sie in ihrer axialen Lage verschoben werden soll, um eine Rillenbildung aufgrund des Anpressdrucks zwischen den Dichtlippen 34 und der Gegenlauffläche 42 zu verhindern.

Weiterhin zeigen die Fig. 1-3, dass an benachbarten Dichtungsträgern 20 jeweils eine ring-förmige axial auskragende Auskragung 64 vorgesehen ist, die in einer komplementären ringförmigen Einkerbung 66 aufgenommen ist. Diese dienen der Selbstzentrierung der Dichtungsträger 20.

Insgesamt kann durch das Vorsehen von Schmiermittel in dem Dichtungssystem 100 der Verschleiß in dem Dichtungssystem signifikant reduziert werden und gleichzeitig eine verbesserte Abdichtung gegenüber dem Seewasser erreicht werden.

### Bezugszeichenliste

- 2: Rotorblattwelle
- 4: Rotorblätter
- 6: Rotornabe
- 8: Lagereinheiten
- 20: Dichtungsträger
- 21: Dichtungskörperaufnahmeaussparungen
- 22: Dichtlippenaufnahmeaussparung; Kammer
- 23: Befestigungsbohrung
- 24: Gewinde
- 25: ringförmige Nut in Dichtungsträger
- 26: Durchgangsbohrung
- 27: Gewinde in Durchgangsbohrung
- 28: Durchgangsbohrung
- 29: Stirnfläche
- 30: Dichtelement
- 32: Dichtungskörper
- 34: Dichtlippe
- 36: Lauffläche
- 37, 38: Stützelement
- 40: Anlaufhülse
- 42: Gegenlauffläche
- 44: Nuten
- 46: Durchgangsbohrung in Anlaufhülse
- 47: Gewinde in Durchgangsbohrung
- 48: Durchgangsbohrung
- 49: innere Mantelfläche
- 50: Befestigungsmittel
- 52: Abdrückschraube
- 54: statische Dichtung
- 55: statische Dichtung
- 56: Opferanode
- 58: Distanzelement
- 60: Madenschraube
- 62: Stöpsel
- 64: ringförmige Auskragung
- 66: ringförmige Einkerbung
- 100: Dichtungssystem

## Patentansprüche

1. Dichtungssystem (100) zum Abdichten einer rotierbaren Komponente einer Unterwasserturbine, insbesondere einer Welle (2) einer Unterwasserturbine, insbesondere einer Unterwasserturbine einer Gezeitenenergieanlage, gegenüber Wasser, insbesondere Seewasser, wobei das Dichtungssystem (100) mehrere Dichtungsträger (20) aufweist, die aneinander angrenzend angeordnet sind, wobei jeder Dichtungsträger (20) ein Dichtelement (30) mit einem ringförmigen Dichtungskörper (32) und mindestens einer sich von dem Dichtungskörper (32) erstreckenden Dichtlippe (34) trägt, wobei der Dichtungskörper (32) an dem Dichtungsträger (20) befestigt ist und die Dichtlippe (34) sich in Richtung der rotierbaren Komponente erstreckt und eine Lauffläche (36) aufweist, mit der die Dichtlippe (34) an einer direkt oder indirekt an der rotierbaren Komponente ausgebildeten Gegenlauffläche (42) anläuft, wobei zwischen Dichtungsträger (20) und rotierbarer Komponente ein Freiraum vorgesehen ist, der eine Kammer (22) bildet, in der ein Schmiermittel aufgenommen ist
**dadurch gekennzeichnet, dass**
das Dichtungssystem (100) einen als Befestigungs-Dichtungsträger (20) ausgebildeten Dichtungsträger (20) aufweist, wobei der Befestigungs-Dichtungsträger (20) dazu ausgelegt ist, an einer stationärer Komponente der Gezeitenanlage, insbesondere an einem Lagerring einer die abzudichtenden Welle (2) lagernden Lagereinheit (8) oder einem die Lagereinheit (8) aufnehmenden Gehäuse befestigt zu werden, wobei der Befestigungs-Dichtungsträger (20) an einer der stationären Komponente zugewandten Stirnseite (29) weiterhin mindestens eine ringförmige Nut (25) aufweist, die dazu ausgelegt ist, eine statische Dichtung (54), insbesondere eine O-Ring Dichtung, aufzunehmen, wobei weiterhin in dem Befestigungs-Dichtungsträger (20) eine Bohrung (28) vorgesehen ist, die einen ersten sich radial erstreckenden Bohrungsteil und einen zweiten sich axial erstreckenden Bohrungsteil aufweist, wobei sich der sich axial erstreckende Bohrungsteil von dem ersten Bohrungsteil bis zu der der stationären Komponente zugewandten Stirnseite (29) erstreckt, so dass der zweite Bohrungsteil radial innerhalb der ringförmigen Nut (25) in die Stirnseite (29) mündet;
und/oder, dass
das Dichtungssystem (100) weiterhin eine Anlaufhülse (40) aufweist, die eine Gegenlauffläche (42) für die mehreren Dichtlippen (34) bildet, wobei die Anlaufhülse (40) an ihrer inneren Mantelfläche (49) mindestens eine ringförmige Nut (44) aufweist, die dazu ausgelegt ist, eine statische Dichtung (55), insbesondere eine O-Ring Dichtung, aufzunehmen, wobei weiterhin in der Anlaufhülse (40) eine Bohrung (46) vorgesehen ist, die einen ersten sich axial erstreckenden Bohrungsteil und einen zweiten sich radial erstreckenden Bohrungsteil aufweist, wobei der sich radial erstreckende Bohrungsteil von dem ersten Bohrungsteil bis zu der der inneren Mantelfläche (49) erstreckt, so dass der zweite Bohrungsteil in axialer Dichtungsrichtung hinter der ringförmigen Nut (44) in die innere Mantelfläche (49) mündet.

2. Dichtungssystem (100) nach Anspruch 1, wobei der Dichtungsträger (20) mindestens eine Durchgangsbohrung (26, 28) aufweist, die fluidisch mit der Kammer (22) verbunden ist.

3. Dichtungssystem (100) nach einem der vorhergehenden Ansprüche, wobei die radiale Bohrung (26) ein erstes radial äußeres Gewinde (27-1) und ein zweites radial inneres Gewinde (27-2) aufweist, wobei das erste Gewinde (27-1) einen größeren Durchmesser hat als das zweite Gewinde (27-2).

4. Dichtungssystem (100) nach einem der vorhergehenden Ansprüche, wobei an dem Dichtungsträger (20) eine in Richtung der rotierbaren Komponente offene Aussparung ausgebildet ist, die als Dichtlippenaufnahmeaussparung (22) ausgebildet ist, um eine Dichtlippe (34) aufzunehmen, und wobei die Aussparung (22) derart dimensioniert ist, dass zwischen der der Lauffläche (36) abgewandten Seite der in der Dichtlippenaufnahmeaussparung (22) aufgenommen Dichtlippe (34) und dem Dichtungsträger (20) ein Freiraum verbleibt, der die Kammer bildet.

5. Dichtungssystem (100) nach einem der vorhergehenden Ansprüche, wobei mindestens ein Dichtungsträger (20), vorzugsweise radial innen, eine ringförmige axial auskragende Auskragung (64) aufweist, die dazu ausgelegt ist, mit einer komplementär ausgebildet ringförmigen axialen Einkerbung (66) eines angrenzend angeordneten Dichtungsträgers (20) in Eingriff zugehen.

6. Dichtungssystem (100) nach einem der vorhergehenden Ansprüche, wobei der mindestens eine Dichtungsträger (20) an seinem radial äußeren Randbereich mehrere umfänglich verteilte, vorzugsweise mit einem Gewinde (24) versehene, Befestigungsbohrungen (23) aufweist, die dazu ausgelegt sind, ein Befestigungsmittel (50) zum Befestigen des Dichtungsträger (20) und/oder eine Abdrückschraube (52) zum Demontieren des Dichtungsträgers (20) aufzunehmen.

7. Dichtungssystem (100) nach Anspruch 6, wobei mehrere Dichtungsträger (20) vorgesehen sind, die an ihren radial äußeren Randbereichen mehrere umfänglich verteilte Befestigungsbohrungen (23) aufweisen, wobei die Dichtungsträger (20) unterschiedliche Außendurchmesser aufweist, und wobei die Außendurchmesser derart dimensioniert sind, dass die im radial äußeren Randbereich angeordneten Befestigungsbohrung (23) im eingebauten Zustand des Dichtungssystems (100) frei zugänglich sind.

8. Dichtungssystem (100) nach einem der vorhergehenden Ansprüche, wobei der Dichtungsträger (20) an zumindest einer Stirnseite (29) weiterhin mindestens eine ring-förmige Nut (25) aufweist, die dazu ausgelegt ist, eine statische Dichtung (54), insbesondere eine O-Ring Dichtung, aufzunehmen.

9. Dichtungssystem (100) nach einem der vorhergehenden Ansprüche, wobei das Dichtungssystem (100) weiterhin einen als Abdeck-Dichtungsträger (20) ausgebildeten Dichtungsträger (20) aufweist, wobei der Abdeck-Dichtungsträger (20) dazu ausgelegt ist, das Dichtungssystem (100) gegenüber einer Außenumgebung abzudecken, wobei vorzugsweise der Abdeck-Dichtungsträger (20) eine Dichtungskörperaufnahmenut (21-1) aufweist, in der eine Partikel-Dichtung (30-1) angeordnet ist.

10. Dichtungssystem (100) nach Anspruch 9, wobei zwischen dem Befestigung-Dichtungsträger (20) und dem Abdeck-Dichtungsträger (20) mindestens ein erster Dichtungsträger (20) und ein zweiter weiterer Dichtungsträger (20) vorgesehen sind, wobei der erste Dichtungsträger (20) an den Befestigungs-Dichtungsträger (20) angrenzend und der zweite Dichtungsträger (20) an den Abdeck-Dichtungsträger (20) angrenzend angeordnet sind.

11. Dichtungssystem (100) nach Anspruch 10, wobei der Befestigungs-Dichtungsträger (20) einen Außendurchmesser aufweist, der größer ist als die Außendurchmesser der anderen Dichtungsträger (20), und wobei der erste Dichtungsträger (20) einen Außendurchmesser aufweist, der größer ist als der Außendurchmesser des zweiten Dichtungsträgers (20), und wobei der Abdeck-Dichtungsträger (20) einen Außendurchmesser aufweist, der kleiner ist als die Außendurchmesser des ersten und/oder des zweiten Dichtungsträgers (20).

12. Dichtungssystem (100) nach einem der vorhergehenden Ansprüche, wobei die Bohrung (46) in der Anlaufhülse (40) ein erstes axial äußeres Gewinde (47-1) und ein zweites axial inneres Gewinde (47-2) aufweist, wobei das erste Gewinde (47-1) einen größeren Durchmesser hat als das zweite Gewinde (47-2).

13. Dichtungssystem (100) nach Anspruch 12, wobei die Anlaufhülse (40) auf die rotierbare Komponente (2) aufgepresst ist.

## Claims

1. Seal system (100) for sealing a rotatable component of an underwater turbine, in particular a shaft (2) of an underwater turbine, in particular an underwater turbine of a tidal power plant, with respect to water, in particular seawater, wherein the seal system (100) has a plurality of seal carriers (20) which are arranged adjacently with respect to each other, wherein each seal carrier (20) carries a sealing element (30) with a ringshaped seal body (32) and at least one sealing lip (34) extending from the seal body (32), wherein the seal body (32) is fastened to the seal carrier (20) and the sealing lip (34) extends in the direction of the rotating component and has a running surface (36), by way of which the sealing lip (34) runs on a counter-running surface (42) formed directly or indirectly on the rotatable component, wherein a clearance is provided between the seal carrier (20) and the rotatable component, which clearance forms a chamber (22), in which a lubricant is received,
**characterized in that**
the seal system (100) has a seal carrier (20) designed as a fastening seal carrier (20), wherein the fastening seal carrier (20) is designed to be fastened to a stationary component of the tidal plant, in particular to a bearing ring of a bearing unit (8) mounting a shaft (2) to be sealed or to a housing receiving a bearing unit (8), wherein, furthermore, the fastening seal carrier (20) has, on an end side (29) facing the stationary component, at least one annular groove (25) which is designed to receive a static seal (54), in particular an O-ring seal, wherein, furthermore, a bore (28) which has a first radially extending bore part and a second axially extending bore part is provided in the fastening seal carrier (20), wherein the axially extending bore part extends from the first bore part as far as the end side (29) facing the stationary component, with the result that the second bore part opens radially within the annular groove (25) into the end side (29);
and/or **in that**
the seal system (100) has, furthermore, a run-on sleeve (40) which forms a counter-running surface (42) for the plurality of sealing lips (34), wherein the run-on sleeve (40) has at least one annular groove (44) on its inner shell surface (49), which annular groove is designed to accommodate a static seal (55), in particular an O-ring seal, wherein, furthermore, a bore (46) is provided in the run-on sleeve (40), which bore has a first axially extending bore part and a second radially extending bore part, wherein the radially extending bore part extends from the first bore part as far as the inner shell surface (49), with the result that the second bore part opens into the inner shell surface (49) behind the annular groove (44) in the axial seal direction.

2. Seal system (100) according to Claim 1, wherein the seal carrier (20) has at least one through bore (26, 28) which is fluidically connected to the chamber (22).

3. Seal system (100) according to either of the preceding claims, wherein the radial bore (26) has a first radial outer thread (27-1) and a second radial inner thread (27-2), wherein the first thread (27-1) has a greater diameter than the second thread (27-2).

4. Seal system (100) according to any one of the preceding claims, wherein a recess which is open in the direction of the rotatable component and is formed as a sealing-lip-receiving recess (22) for receiving a sealing lip (34) is formed on the seal carrier (20), and wherein the recess (22) is dimensioned in such a way that a clearance which forms the chamber remains between the side, facing away from the running surface (36), of the sealing lip (34), received in the sealing-lip-receiving recess (22), and the seal carrier (20).

5. Seal system (100) according to any one of the preceding claims, wherein at least one seal carrier (20) has, preferably radially on the inside, an annular axially protruding projection (64) which is designed to engage with a complementarily configured annular axial notch (66) of an adjacently arranged seal carrier (20).

6. Seal system (100) according to any one of the preceding claims, wherein the at least one seal carrier (20) has, on its radially outer edge region, a plurality of circumferentially distributed fastening bores (23) which are preferably provided with a thread (24) and are designed to receive a fastening means (50) for fastening the seal carrier (20) and/or a forcing screw (52) for removing the seal carrier (20).

7. Seal system (100) according to Claim 6, wherein a plurality of seal carriers (20) are provided, which have, at their radially outer edge regions, a plurality of circumferentially distributed fastening bores (23), wherein the seal carriers (20) have different outer diameters, and wherein the outer diameters are dimensioned in such a way that the fastening bores (23) arranged in the radially outer edge region are freely accessible in the installed state of the seal system (100).

8. Seal system (100) according to any one of the preceding claims, wherein, furthermore, the seal carrier (20) has, on at least one end side (29), at least one annular groove (25) which is designed to receive a static seal (54), in particular an O-ring seal.

9. Seal system (100) according to any one of the preceding claims, wherein, furthermore, the seal system (100) has a seal carrier (20) formed as a cover seal carrier (20), wherein the cover seal carrier (20) is designed to cover the seal system (100) relative to an external environment, wherein the cover seal carrier (20) preferably has a seal body receiving groove (21-1), in which a particle seal (30-1) is arranged.

10. Seal system (100) according to Claim 9, wherein at least one first seal carrier (20) and a second further seal carrier (20) are provided between the fastening seal carrier (20) and the cover seal carrier (20), wherein the first seal carrier (20) is arranged adjacently with respect to the fastening seal carrier (20) and the second seal carrier (20) is arranged adjacently with respect to the cover seal carrier (20).

11. Seal system (100) according to Claim 10, wherein the fastening seal carrier (20) has an outer diameter which is greater than the outer diameter of the other seal carriers (20), and wherein the first seal carrier (20) has an outer diameter which is greater than the outer diameter of the second seal carrier (20), and wherein the cover seal carrier (20) has an outer diameter which is smaller than the outer diameters of the first and/or second seal carrier (20).

12. Seal system (100) according to any one of the preceding claims, wherein the bore (46) in the run-on sleeve (40) has a first axially outer thread (47-1) and a second axially inner thread (47-2), wherein the first thread (47-1) has a greater diameter than the second thread (47-2).

13. Seal system (100) according to Claim 12, wherein the run-on sleeve (40) is pressed onto the rotatable component (2).

## Revendications

1. Système d'étanchéité (100) destiné à réaliser l'étanchéité d'un composant rotatif d'une turbine sous-marine, en particulier d'un arbre (2) d'une turbine sous-marine, en particulier d'une turbine sous-marine d'une installation à énergie marémotrice, par rapport à l'eau, notamment à l'eau de mer, le système d'étanchéité (100) possédant plusieurs porte-garniture d'étanchéité (20) qui sont disposés adjacents les uns aux autres, chaque porte-garniture d'étanchéité (20) portant un élément d'étanchéité (30) pourvu d'un corps de garniture d'étanchéité (32) annulaire et d'au moins une lèvre d'étanchéité (34) qui s'étend depuis le corps de garniture d'étanchéité (32), le corps de garniture d'étanchéité (32) étant fixé au porte-garniture d'étanchéité (20) et la lèvre d'étanchéité (34) s'étendant en direction du composant rotatif et possédant une surface de contact (36), avec laquelle la lèvre d'étanchéité (34) vient en butée sur une surface de contact homologue (42) formée directement ou indirectement sur le composant rotatif, un espace libre étant prévu entre le porte-garniture d'étanchéité (20) et le composant rotatif, lequel forme une chambre (22) dans laquelle est reçu un lubrifiant
**caractérisé en ce que**
le système d'étanchéité (100) possède un porte-garniture d'étanchéité (20) réalisé sous la forme d'un porte-garniture d'étanchéité de fixation (20), le porte-garniture d'étanchéité de fixation (20) étant conçu pour être fixé à un composant stationnaire de l'installation à énergie marémotrice, en particulier à une bague de roulement d'une unité de roulement (8) qui supporte l'arbre (2) dont il faut réaliser l'étanchéité ou d'un boîtier qui accueille l'unité de roulement (8), le porte-garniture d'étanchéité de fixation (20) possédant en outre, au niveau d'un côté frontal (29) qui fait face au composant stationnaire, au moins une rainure annulaire (25) qui est conçue pour accueillir une garniture d'étanchéité statique (54), en particulier une garniture d'étanchéité de type joint torique, un trou (28) étant en outre prévu dans le porte-garniture d'étanchéité de fixation (20), qui possède une première partie de trou qui s'étend radialement et une deuxième partie de trou qui s'étend axialement, la partie de trou qui s'étend axialement s'étendant de la première partie de trou jusqu'au côté frontal (29) qui fait face au composant stationnaire, de sorte que la deuxième partie de trou débouche radialement à l'intérieur de la rainure annulaire (25) dans le côté frontal (29) ;
et/ou **en ce que**
le système d'étanchéité (100) possède en outre un manchon de butée (40) qui forme une surface de contact homologue (42) pour la pluralité de lèvres d'étanchéité (34), le manchon de butée (40) possédant au moins une rainure annulaire (44) au niveau de sa surface d'enveloppe intérieure (49), conçue pour accueillir une garniture d'étanchéité statique (55), en particulier un joint torique, un trou (46) étant en outre prévu dans le manchon de butée (40), lequel comprend une première partie de trou qui s'étend axialement et une deuxième partie de trou qui s'étend radialement, la partie de trou qui s'étend radialement s'étendant de la première partie de trou jusqu'à la surface d'enveloppe intérieure (49), de sorte que la deuxième partie de trou débouche, dans la direction axiale de la garniture d'étanchéité, derrière la rainure annulaire (44), dans la surface d'enveloppe intérieure (49).

2. Système d'étanchéité (100) selon la revendication 1, le porte-garniture d'étanchéité (20) possédant au moins un trou de passage (26, 28) qui est relié fluidiquement à la chambre (22).

3. Système d'étanchéité (100) selon l'une des revendications précédentes, le trou radial (26) possédant un premier filetage radialement extérieur (27-1) et un deuxième filetage radialement intérieur (27-2), le premier filetage (27-1) ayant un diamètre supérieur au deuxième filetage (27-2).

4. Système d'étanchéité (100) selon l'une des revendications précédentes, un évidement ouvert étant formé au niveau du porte-garniture d'étanchéité (20) en direction du composant rotatif, lequel est réalisé sous la forme d'un évidement de réception de lèvre d'étanchéité (22) afin de recevoir une lèvre d'étanchéité (34), et l'évidement (22) étant dimensionné de telle sorte qu'il reste un espace libre entre le côté opposé à la surface de contact (36) de la lèvre d'étanchéité (34) reçue dans l'évidement de réception de lèvre d'étanchéité (22) et le porte-garniture d'étanchéité (20), lequel forme la chambre.

5. Système d'étanchéité (100) selon l'une des revendications précédentes, au moins un porte-garniture d'étanchéité (20) possédant, de préférence radialement à l'intérieur, porte-à-faux (64) en forme d'anneau qui fait saillie dans le sens axial, lequel est conçu pour venir en prise avec une gorge (66) axiale annulaire de configuration complémentaire d'un porte-garniture d'étanchéité (20) disposé adjacent.

6. Système d'étanchéité (100) selon l'une des revendications précédentes, l'au moins un porte-garniture d'étanchéité (20) possédant, au niveau de sa zone de bordure radialement extérieure, plusieurs trous de fixation (23) répartis sur le pourtour, de préférence pourvus d'un filetage (24), lesquels sont conçus pour accueillir un moyen de fixation (50) servant à fixer le porte-garniture d'étanchéité (20) et/ou une vis de chasse (52) servant à démonter le porte-garniture d'étanchéité (20).

7. Système d'étanchéité (100) selon la revendication 6, plusieurs porte-garnitures d'étanchéité (20) étant prévus, qui possèdent plusieurs trous de fixation (23) répartis sur le pourtour au niveau de leurs zones de bordure radialement extérieures, les porte-garnitures d'étanchéité (20) présentant des diamètres extérieurs différents et les diamètres extérieurs étant dimensionnés de telle sorte que les trous de fixation (23) disposés dans la zone de bordure radialement extérieure sont librement accessibles à l'état monté du système d'étanchéité (100).

8. Système d'étanchéité (100) selon l'une des revendications précédentes, le porte-garniture d'étanchéité (20) possédant en outre au moins une rainure annulaire (25) au niveau d'au moins un côté frontal (29), laquelle est conçue pour accueillir une garniture d'étanchéité statique (54), en particulier une garniture d'étanchéité sous forme de joint torique.

9. Système d'étanchéité (100) selon l'une des revendications précédentes, le système d'étanchéité (100) possédant en outre un porte-garniture d'étanchéité (20) réalisé sous la forme d'un porte-garniture d'étanchéité de recouvrement (20), le porte-garniture d'étanchéité de recouvrement (20) étant conçu pour recouvrir le système d'étanchéité (100) par rapport à un environnement extérieur, le porte-garniture d'étanchéité de recouvrement (20) possédant de préférence une rainure de réception de corps d'étanchéité (21-1) dans laquelle est disposée une garniture d'étanchéité à particules (30-1).

10. Système d'étanchéité (100) selon la revendication 9, au moins un premier porte-garniture d'étanchéité (20) et un deuxième porte-garniture d'étanchéité (20) supplémentaire étant prévus entre le porte-garniture d'étanchéité de fixation (20) et le porte-garniture d'étanchéité de recouvrement (20), le premier porte-garniture d'étanchéité (20) étant disposé adjacent au porte-garniture d'étanchéité de fixation (20) et le deuxième porte-garniture d'étanchéité (20) au porte-garniture d'étanchéité de recouvrement (20).

11. Système d'étanchéité (100) selon la revendication 10, le porte-garniture d'étanchéité de fixation (20) présentant un diamètre extérieur qui est supérieur au diamètre extérieur des autres porte-garnitures d'étanchéité (20), et le premier porte-garniture d'étanchéité (20) présentant un diamètre extérieur qui est supérieur au diamètre extérieur du deuxième porte-garniture d'étanchéité (20), et où le porte-garniture d'étanchéité de recouvrement (20) présentant un diamètre extérieur qui est inférieur au diamètre extérieur du premier et/ou du deuxième porte-garniture d'étanchéité (20).

12. Système d'étanchéité (100) selon l'une des revendications précédentes, le trou (46) dans le manchon de butée (40) ayant un premier filetage axialement extérieur (47-1) et un deuxième filetage axialement intérieur (47-2), le premier filetage (47-1) ayant un diamètre supérieur au deuxième filetage (47-2).

13. Système d'étanchéité (100) selon la revendication 12, le manchon de butée (40) étant pressé sur le composant rotatif (2).
